# EUROPEAN PATENT APPLICATION

(11) **EP 1 057 864 A1**
(43) Date of publication of application: **06.12.2000**
(21) Application number: 99830351.5
(22) Date of filing: 04.06.1999
(51) Int. Cl.: C08L 23/10

(54) **A functionalized thermoplastic polymer composition and a process for its preparation**

(71) Applicant: Johnson Controls Automotive S.r.l., 20063 Cernusco S/N (MI) (IT)
(72) Inventor: Mascia, Francesco, 22070 Guanzate (CO) (IT); Arrighi, Franca, 22070 Bulgarograsso (CO) (IT)
(74) Representative: Gislon, Gabriele

(57) **Abstract**

A polyolefin-based thermoplastic formulation giving products with soft-touch and functionalized to be welded and painted comprises, by weight of the total weight of the polymers, 10-80% of polypropylene, 0-85% by weight of EP(D)M rubber, 0-40% of polybutadiene, and 0,5-60% of at least one unsaturated compound selected from: ethylene-vinyl acetate copolymers and terpolymers, NBR, ethylene-acrylic ester copolymers and terpolymers, and polybutadiene-based polyurethanes or their precursors, or mixtures thereof; with the proviso that the total amount of polybutadiene and unsaturated compounds is equal or less than 60% by weight. The formulation is prepared via visbreaking of the above listed compounds with radical-generating agents.

## Description

The present invention relates to a polyolefin-based functionalized thermoplastic polymer formulation which can be injection-molded, has a good hand (soft-touch), a high scratch-resistance, and is suitable to various forms of finishing, such as welding, gluing and painting. Particularly, the polymer formulation according to the invention is suitable to such uses as the external material - or skin - of trim panels for autovehicles.

The invention relates further to a process for the preparation of the aforementioned formulation.

Various types of injection-moldable polyolefin-based polymers with a soft-touch are known in the art.

Application WO96/22327 describes a polymer formulation suitable for injection molding comprising 5-65% by weight of EP(D)M, 1-30% of polyalkanylene and their mixtures, grafted onto a matrix of polypropylene. This formulation has good processability and reduced stickyness, but, like other similar formulations, has. little scratch-resistance and can not be subjected to welding, gluing or painting processes.

Another problem of known formulations is their processability.

Like the above mentioned ones, these materials are used to produce the external layer of skin in such products as car trim panels; the area of the panel is relatively wide while the thickness of the skin layer is very reduced. The material used should therefore have excellent processability to be able to distribute itself in the die avoiding the form of "tiger-stripes" (advancement fronts) i.e. the stripes or signs due to the different rheological behavior of the polyolefin matrix with respect to the rubbery part.

The known formulations do not satisfy the above mentioned requirements and produce products having a high number of tiger stripes.

There is a need, therefore, to have formulations with the aforementioned improved features.

Such purpose is achieved by the present invention which relates to a polyolefin-based thermoplastic polymer formulation characterized by comprising by percentage of the total polymer weight, 10-80% of polypropylene, 0-85% of EP(D)M rubber, 0-40% of polybutadiene, and 0.5-60% of at least one unsaturated compound selected from: ethylene-vinyl acetate copolymers and terpolymers, NBR, acrylic ethylene-ester copolymers and terpolymers and polybutadiene polyurethanes or their precursors, the total amount of polybutadiene and unsaturated compounds not exceeding 60% by weight.

According to a preferential embodiment of the invention, the formulation contains polybutadiene-based polyurethanes obtained from precursors constituted by -OH, -NCO, -COOH functionalized polybutadienes.

According to a further embodiment the invention, the formulation contains the above mentioned precursory functionalized polybutadienes .

According to another preferential aspect, the formulation also comprises 5-30% of cellulose by weight of the total of the formulation.

The invention further relates to a composition for the preparation of a polymer formulation of the type above described, characterized according to Claim 5.

The invention further relates to a process for the production of a thermoplastic polymer formulation, characterized according to Claim 7.

The invention further relates to a trim element for vehicles, provided with a surface at least partly made with a material whose formulation is of the type described above. In a preferential embodiment, the product has an internal support layer and an external skin layer produced with the formulation of the invention.

The formulation according to the present invention has numerous advantages. The layer of "skin" obtained with the formulation of the invention is provided with particularly high scratch-resistance values, while also having excellent soft-touch and good mechanical characteristics.

The formulation presents excellent processability that makes it perfectly suitable both for being extruded in a flat layer, and for injection molding, and particularly for co-injection molding of products in which the formulation according to the invention constitutes the external layer or "skin."

A further advantage is that the products obtained from a material having the formulation of the invention can be subjected to finishing processes and particularly to painting, glueing and welding, e.g. high frequency welding.

The thermoplastic polymer formulation according to the invention comprises, by percentage of the total weight of polymers ( i.e. excluding the weight of possible fillers), 10-80% of polypropylene, 0-40% of polybutadiene, 0-85% by weight of EP(D)M and 0,5-60% of an unsaturated compound selected from among ethylene-vinyl acetate copolymers and terpolymers (e.g. EVA), NBR (nitrile-butadiene rubber), acrylic ethylene-ester copolymers and terpolymers (e.g. EMA, EBA), and polybutadiene-polyurethanes or their precursors.

The total amount of unsaturated compounds (that is EVA etc., NBR, EMA, EBA etc. and polybutadiene-polyurethane) and of polybutadiene is less than or equal to 60% by weight of the polymers. The EP(D)M rubber and the polybutadiene are partially cross-linked and grafted onto the polypropylene.

Precursors of the polybutadiene-polyurethanes are here meaning functionalised polybutadienes with terminal groups selected from -NCO, -OH and -COOH.

Polypropylenes suitable for use in the invention are, for instance, propylene polymers and copolymers with isotatic index greater than 0.1 %, such as the copolymers of propylene with one or more alpha-olefines having 2-10 atoms of carbon, as well as formulations of polypropylene obtained with sequential polymerization of polypropylene and of its mixtures with ethylene and/or alpha-olefines. The (co)polymers of suitable propylene have a MFI (Melt Flow Index) that can vary over a wide range and is preferably within the range of 0.1 and 60 at 230°C/ 21.6 N (ASTM 1238). Examples of suitable polypropylenes are those distributed commercially by Borealis under the proprietary name DAPLEN® and the codes DS10, US105A, CHC3007, FSC1012, and USC 1012.

The amount of polypropylene present is preferably between 15 and 50%.

EP(D)M rubbers suitable for use in the present invention are EP(D)M polymers and rubbers and their analogs; they are known in the art and are available commercially. Examples of suitable EP(D)M polymers are those commercially available from Enichem Elastomeri under the name of DUTRAL®; similar known examples of EP(D)M polymers are random copolymers having amorphous content greater than 50% by weight, for instance C₂--C₈ type copolymers such as ENGAGE®, from Du Pont Dow Elastomers. The EP(D)M rubbers are, by preference, oil extended. Suitable oils for the extension are known in the art and commercially available, such as naftene and paraffin oils for instance. The amount of oil is generally between 40 and 60% by weight of the rubber and preferably around 50% by weight.

Preferably the amount of EP(D)M rubber present is 40-60% if oil extension is used or 20-50% if dry.

Preferential polybutadiene, usable in the invention, is that which contains at least 20% of structure 1,2. An example of suitable polybutadiene is the one known as Lithene PH® of the Revertex Ltd. Preferably, the polybutadiene present is between 0.5% and 10%.

Suitable ethylene-vinyl acetate copolymers and terpolymers are those which contain between 6% and 26% of vinyl acetate by weight and preferably between 9% and 18% by weight. An example of ethylene-vinyl acetate copolymers is EVA, for instance that known as Escorene FL909, from Exxon. Suitable terpolymers are ethylene-vinyl acetate-maleic-anhydride, for instance that commercialized under the name of OREVAC by ELF ATOCHEM. Preferably the amount of EVA and terpolymers is between 10% and 25%.

Suitable NBR polymers are butadiene-acrylonitrile copolymers with acrylonitrile content within the range 25-35%. An example of suitable NBR polymer is the one known as CHEMIGUM P86F from Goodyear, containing between 30.5 and 33,5% of acrylonitrile. Suitable acrylic ethylene-ester copolymers are random ethylene-acrylic-ester copolymers such as EMA (ethylene-methyl acrylate) and EBA (ethylene-butyl acrylate) containing between 6 and 22% by weight of acrylate. Copolymers of this type are commercialized under the LOTRYL name by ELF ATOCHEM. Other suitable acrylate polymers are ethylene-ester acrylic-maleic-anhydride terpolymers (with acrylate content between 6-22% by weight) commercialized under the name of LOTADER by ELF ATOCHEM.

Suitable polyurethane polymers are those unsaturated, based on polybutadiene, i.e. polymers obtained by reacting polybutadiene functionalized with isocyanide, hydroxyl or acidic terminal groups; examples of these prepolymers are reported below.

According to the invention, besides the polybutadiene-based-polyurethanes, their precursors may also be used, i.e. polybutadienes prepared with functional terminal groups selected from -OH, -NCO, -COOH. Such precursors can also be used alone, instead of the other mentioned unsaturated compounds.

It is believed that these functionalized polybutadienes, like the other unsaturated compounds (polybutadiene-polyurethanes, EVA, NBR), behave in a way analogous to the EP(D)M rubbers and the polybutadiene, i.e. that they partly cross-link and become grafted onto the polypropylene during the process of production of the formulation by means of vis breaking. In this way, polymers that are incompatible (polypropylene and polyurethane) are made compatible and a polymer formulation- i.e. a material- is obtained provided with polar groups, that make the material suitable to be painted, welded or glued. Preferably, the amount of polybutadiene-based polyurethane or its precursors is between 10% and 45%.

The total amount of unsaturated compounds, i.e. polybutadiene, EVA, EVA terpolymers, NBR, ethylene-acrylic-ester copolymers and terpolymers, polyurethanes and precursors (polybutadienes with functional groups), is equal to a maximum of 60% by weight.

In an embodiment of the invention the composition that must be subjected to reactive extrusion (vis-breaking) comprises both polybutadiene functionalized with hydroxyl groups and polybutadiene functionalized with isocyanide groups. It is believed that the polybutadiene prepolymers react together during the visbreaking reaction to give a polyurethane grafted onto the polypropylene.

In another embodiment, the polybutadiene-based polyurethane to be used is first produced starting from mixtures of the following compounds: di-isocyanates, including polybutadiene functionalized with -NCO terminal groups, diphenylmethane di-isocyanate (MDI), toluene di-isocyanate (TDI) and diols such as butanediol, hexanediol, polybutadiene functionalized with hydroxyl terminal groups.

Polyurethane precursors of the type described above, suitable for the present invention are for instance those commercially available under the name KRASOL®, LBD and LBH, from KAUCUK (Czech Republic).

An example of the synthesis of a polybutadiene-based polyurethane starting from a polybutadiene isocyanate and two types of diol, a hexanediol and a hydroxylated polybutadiene, is reported in the following examples.

A preferential embodiment of the invention provides for the presence of 5-30% (by weight of the total formulation) of cellulose. Cellulose suitable for to the purpose is the pure or substantially pure one such as, for instance, that commercially available under the name ARBOCELL ZZ600 and BEM 600 from JRS (Germany).

Preferably, from 10% to 20 % of cellulose is used. It has been surprisingly found that the presence of cellulose results in a remarkable increase in the scratch-resistance of the product and in an improvement of the mechanical properties, without this negatively influencing the soft-touch features of the product.

The invention further protects the compositions for preparing a formulation of the type described above. The term formulation means the material, for instance in granules, powder or pellets, into which rubbers and unsaturated compounds have already been converted by reactive extrusion (vis-breaking) and presumably are partially cross-linked and grafted onto the polypropylene. The material of the formulation is ready to be molded and is already endowed with the desired features.

The term composition means the mixture of polymers and additives before their processing by means of reactive extrusion (vis-breaking,) to give the formulation of the invention.

According to the present invention the composition comprises, in an analogous way to that described above, as a percentage by weight of the total weight of the polymers, 10-80% of polypropylene, 0-85% of an EP(D)M rubber, 0-40% of polybutadiene, and 0,5-60% of at least one unsaturated compound selected from ethylene-vinyl acetate copolymers and terpolymers, NBR, ethylene-acrylic-ester copolymers and terpolymers, and polybutadiene-based polyurethanes or their precursors, where the total amount of unsaturated compounds and polybutadiene is less than or equal to 60% by weight.

Beyond these components, the composition further comprises 0.1-1.5% of a radical-generating agent at the processing temperature of the composition, that is when the composition is subjected to vis-breaking. The suitable polymers are those listed above.

Preferential agents able to generate radicals at the processing temperature of the composition are peroxides, such as, for instance, dicumyl peroxide, and 2,5-bis(tert-butylperoxyl)2,5-dimethyl hexane. Other suitable agents are non-peroxide initiators such as 2,%dimethyl-2,3-diphenyl hexane and 2,3-dimethyl-2,3-diphenil butane. All the radicals-generating agents are able to generate radicals, and therefore to start cross-linking, at the processing temperature of the composition, i.e. at the temperature reached by the composition when it has been melted, kneaded and is then extruded.

The process for the production of a thermoplastic polymer formulation according to the invention provides for the kneading in the molten state of a composition of the type described above, i.e. containing the radical-generating agents, at such a temperature as to activate said radical generating agents to create a plurality of active sites on the polypropylene chain. At least partial cross-linking of the rubbers and a greater or lesser degradation of the polypropylene is obtained this way. In this phase, known also as "visbreaking" or "reactive extrusion", the polybutadiene acts as a grafting agent. It is presumed that, similarly, EVA and ethylene-vinyl acetate-maleic anhydride terpolymers, NBR, ethylene-acrylic ester co- and terpolymers and polybutadiene-based polyurethanes and their precursors also behave as grafting units on the polypropylene. The resultant composition will give a material with excellent mechanical and soft-touch characteristics and high scratch-resistance.

The temperature at which this process of reactive extrusion takes place is generally between 200 and 220 °C.

In order to avoid thermo-degradation phenomena of the components of the mixture, particularly during the reactive extrusion described above, antioxidants and stabilizers will be present in the usual amount, for instance between 0.1 and 1.5% by weight on the total weight of the polymers. These additives are known in the art; examples of suitable additives are sterically hindered phenols, secondary amines, thioethers, phosphites and phosphonites.

Preferably the amount of filler in the formulation is between 5-30%. Besides the cellulose described above, other vegetable fillers can be used, as well as additives and fillers such as for instance carbonate, silica and silicates like wollastonite, talc, caolin and dyes.

The invention will be further illustrated with reference to the following examples.

### Example A- Synthesis of the polybutadiene based polyurethane

175.2 parts of KRASOL LBD, a polybutadiene with isocyanate end groups from KAUCUK (Czech Rep. ), 22.55 parts of KRASOL LBH 3000, a polybutadiene with hydroxyl end groups and 2.25 parts of 2-ethyl-1,3-hexanediol are mixed and reacted at 80°C for 48 hours. A solid is obtained which is milled to be used in example 4.

### Example 1

*44.8 parts of DUTRAL CS 9615 (an EPDM polymer oil-extended 45 %), 35.8 parts of DAPLEN FSC 1012 Polypropylene (MFI 25 at 230°C/ 5Kg), 17 parts of EVA ESCORENE FL 909 (9.4% vinyl acetate content) from EXXON, 0.4 parts of a peroxide radical-generating agent di(t-butyl)peroxide-di-isopropylbenzene 40% on inactive support, 0.9 parts of antioxidant additives and 1.1 parts of LITHENE PH polybutadiene from REVERTEX CHEMICALS were mixed at 180-220°C in a Marls Ø 133 L/D= 40 co-rotating twin-screw extruder and then pelletized.*

### Example 2

*48 parts of DUTRAL CS 9615 (an EPDM polymer oil-extended 45 %)*, *37.4 parts of DAPLEN FSC 1012 Polypropylene (MFI 25 at 230°C/ 5Kg),*

*10 parts of CHEMIGUM P86F from GOODYEAR (a butadiene-acrylonitrile rubber), 0.4 parts of peroxide radical-generating agent di(t-butyl) peroxide-di-isopropylbenzene 40 % on inactive support, 0.9 parts of antioxidant additives and*
*1.3 parts of LITHENE PH polybutadiene from REVERTEX CHEMICALS were mixed at 180-220°C in a Maris Ø 133 L/D= 40 co-rotating twin-screw extruder and then pelletized.*

### Example 3

*52 parts of DUTRAL CS 9615 (an EPDM polymer oil-extended 45 %), 42 parts of Polypropylene DAPLEN FSC 1012 (MFI 25 at 230°C/ 5KgJ, 0.4 parts of peroxide radical-generating agent di(t-butil) peroxide-di-isopropylbenzene at 40 % on inactive support, 0.4 parts of antioxidant additives, 1 part of LITHENE PH polybutadiene from REVERTEX CHEMICALS, 4 parts of KRASOL LBD (a polybutadiene with isocyanate end groups) and 0.2 parts of 2-etil-1,3-hexanediol (Aldrich)*
*were mixed at 180-220°C in a Maris Ø 133 L/D= 40 co-rotating twin-screw extruder and then pelletized.*

### Example 4

*48 parts of DUTRAL CS 9615 (an EPDM polymer 45% oil-extended), 40 parts of Polypropylene DAPLEN FSC 1012 (MFI 25 at 230°C/ 5Kg), 10 parts of polybutadiene-based Polyurethane synthesized as described above, 0.4 parts of peroxide radical-generating agent di(t-butyl) peroxide-di-isopropylbenzene at 40% on inactive support, 0.7 parts of antioxidant additives and 0.9 parts of polybutadiene LITHENE PH of the REVERTEX CHEMICALS were mixed at 180-220°C in a Maris Ø 133 L/D= 40 co-rotating twin-screw extruder and then pelletized.*

The following table reports the values of some mechanical characteristics of the formulations obtained.

**Table 1**

| | Example 1 | Example 2 | Example 3 | Example 4 |
|---|---|---|---|---|
| MFI | | | | |
| at 230°/21 6N | 8.8 | 5.5 | 14.6 | 9.5 |
| Shore D | 32 | 25 | 25 | 23 |

The materials obtained were molded by, means of co-injection molding technique on 1850-ton Mir press at a temperature of about 220°C, to give products in which the formulation constitutes the external layer of skin.

The materials have good processability and distribution of the materials, as well as reduced fogging and improved scratch-resistance.

Further, it was observed a substantial reduction of the advancement fronts (tiger-stripes) usually due to the different rheological behavior of the polyolefin matrix with respect to the rubber portion.

The polymer formulation as obtained is particularly suitable for the production of trim elements for cars where by the term "components " are understood all the known components for cars, such as panels, bridges, console, and coverings generally.

## Claims

1. A polyolefin-based thermoplastic polymer formulation characterized by comprising, by weight of the total weight of the polymers, 10-80% of polypropylene, 0-85% by weight of EP(D)M rubber, 0-40% of polybutadiene, and 0,5-60% of at least one unsaturated compound selected from: ethylene-vinyl acetate copolymers and terpolymers, NBR, ethylene-acrylic ester copolymers and terpolymers, and polybutadiene-based polyurethanes or their precursors, or mixtures thereof, the maximum total amount of polybutadiene and unsaturated compounds being 60% by weight.

2. A formulation according to Claim 1, in which said precursors of polybutadiene-based polyurethanes are one or more polybutadienes provided with terminal groups selected from -NCO, -OH, -COOH.

3. A formulation according to Claim 1 or 2, in which said EP(D)M rubbers are oil extended at 30-60% by weight.

4. A formulation according to any previous Claim, characterized by that polybutadiene-based polyurethane being the reaction product of a polybutadiene having an -NCO group with a polybutadiene having a terminal group selected from -OH and -COOH or with a diol known in the art.

5. A composition for the preparation of a formulation according to any preceding Claim, characterized by comprising by weight out of the total weight of the polymers, 10-80% of a polyolefin selected from polyethylene and polypropylene, 0-85% by weight of an EP(D)M rubber, 0-40% of a polybutadiene, 0,5-60% of at least one unsaturated compound selected from ethylene-vinyl acetate copolymers and terpolymers, NBR, ethylene-acrylic ester copolymers and terpolymers, and polybutadiene-based polyurethanes or their precursors and 0.1-1.5% of a radical-generating agent at the processing temperature of the composition, the maximum total amount of polybutadiene and of unsaturated compounds being 60% by weight.

6. A composition according to Claim 5, comprising 0,5-20% of at least one polybutadiene provided with terminal groups selected from -NCO, -OH,-COOH.

7. A process for the production of a thermoplastic polymer formulation, characterized by mixing a composition comprising, by weight of the total weight of the polymers, 10-80% of a polyolefin selected from polyethylene and polypropylene, 0-85% by weight of an EP(D)M rubber, 0-40% of a polybutadiene, 0,5-60% of at least one unsaturated compound selected from ethylene-vinyl acetate copolymers and terpolymers, NBR, ethylene-acrylic ester copolymers and terpolymers, and polybutadiene-based polyurethanes or their precursors, the maximum total amount of polybutadiene and of unsaturated compounds being 60% by weight, and 0,1-0,6% of at least one agent generating radicals, at a temperature such as to activate said radical-generating agent to effect a partial cross-linking of at least some of the polymers present.

8. A process according to Claim 7, in which at least one polybutadiene provided with terminal groups selected from -OH, -NCO and -COOH, is used as uns aturated compound.

9. A process according to Claim 7 or 8, in which said polybutadiene-based polyurethane is prepared by reaction of -OH,-COOH and -NCO functionalized polybutadienes.

10. A process for the preparation of an unsaturated polybutadiene-based polyurethane, in which a polybutadiene prepolimer provided with isocyanate end groups is reacted with one or more diols.

11. A process for the preparation of an unsaturated polybutadiene-based polyurethane, in which a polybutadiene prepolimer provided with hydroxyl terminal groups is reacted with one or more di-isocyanates.

12. A trim element for autovehicles, characterized by having an external surface made at least partly with a thermoplastic material having a formulation according to any Claim 1 to 4.

13. A trim element for autovehicles according to Claim 12, comprising an internal support layer and an external skin layer, said external skin layer corresponding to said surface.
